# EUROPÄISCHE PATENTSCHRIFT

(11) **EP 1 963 717 B1**
(45) Veröffentlichungstag und Bekanntmachung des Hinweises auf die Patenterteilung: **17.02.2010**
(21) Anmeldenummer: 06841019.0
(22) Anmeldetag: 19.12.2006
(51) Int. Cl.: F16H 57/02, F16B 5/04, F16H 48/08

(54) **DIFFERENTIALGEHÄUSE UND HERSTELLUNGSVERFAHREN**
DIFFERENTIAL HOUSING AND PRODUCTION METHOD
CARTER DE DIFFERENTIEL ET PROCEDE DE REALISATION

(30) Priorität: 22.12.2005 DE 102005062017
(43) Veröffentlichungstag der Anmeldung: 03.09.2008
(73) Patentinhaber: SONA BLW Präzisionsschmiede GmbH, 80807 München (DE); KSM Castings GmbH, 31137 Hildesheim (DE)
(72) Erfinder: GUTMANN, Peter, 81927 München (DE); WÜRKER, Lars, 42897 Remscheid (DE)
(74) Vertreter: Grättinger Möhring von Poschinger Patentanwälte Partnerschaft
(86) Internationale Anmeldenummer: PCT/EP2006/012211
(87) Internationale Veröffentlichungsnummer: WO 2007/079925

(56) Entgegenhaltungen:
- DE-A1- 2 653 978
- JP-A- 4 151 071
- US-A1- 1 859 245
- US-A1- 1 869 528
- US-A1- 2 958 230
- US-A1- 2004 157 696

## Beschreibung

Die vorliegende Erfindung betrifft ein Differentialgehäuse umfassend eine Gehäuseglocke und einen Gehäusedeckel, wobei Gehäuseglocke und Gehäusedeckel mittels einer durch mehrere Niete hergestellten Nietverbindung miteinander verbunden sind sowie ein Verfahren zu dessen Herstellung und Montage. Die DE-A-26 53 978 wird als nächstliegender Stand der Technik gegenüber den Gegenständen der unabhängigen Ansprüche 1 und 7 angesehen.

Ein Differentialgehäuse dient der Ausnahme und Führung der Bauteile eines Differentialgetriebes, das üblicherweise die das Ausgleichsgetriebe bildenden Kegelräder und Ritzel sowie das vom Antrieb angetriebene Antriebszahnrad bzw. Tellerrad umfaßt. Ferner weist ein solches Differentialgehäuse auf zwei einander gegenüberliegenden Seiten, vorzugsweise im Gehäusedeckel und in der Gehäuseglocke, Öffnungen für die koaxial zu verschiedenen Seiten aus dem Gehäuse austretenden Abtriebswellen auf. Gehäusedeckel und Gehäuseglocke eines fertig montierten Differentialgehäuses sind nach dem Stand der Technik fachüblich mittels mehrerer über den Umfang des Gehäuses verteilter Schraubbolzen oder Niete miteinander verbunden.

Der für ein Ausgleichsgetriebe samt Differentialgehäuse zur Verfügung stehende Bauraum ist besonders in Frontgetrieben bei einem PKW äußerst knapp bemessen, so daß Bauraumeinsparungen schon im Bereich von wenigen Millimetern wünschenswert sind. Ferner ist zur Montage gattungsgemäßer Differentialgehäuse, deren Gehäuseteile mittels gewöhnlicher Nietverbindungen verbunden werden, eine Vielzahl an Arbeitsschritten notwendig. Die zu verbindenden Gehäuseteile müssen jeweils paßgenau mit entsprechenden Bohrungen für die Niete versehen werden und vor Durchführung der Niete durch die Bohrungen beider Gehäuseteile mittels Zentrierstiften exakt zueinander zentriert werden. Außerdem beanspruchen die Niete beidseits der miteinander zu verbindenden Bauteile Bauraum für den Niet-Schließkopf einerseits und den Niet-Setzkopf andererseits.

Vor diesem Hintergrund ist es die Aufgabe der vorliegenden Erfindung, die vorstehend beschriebenen Nachteile zu beseitigen und ein platzsparendes, stabiles und einfach herzustellendes Differentialgehäuse der eingangs genannten Art sowie ein entsprechendes Verfahren zu dessen Herstellung und Montage zur Verfügung zu stellen.

Diese Aufgabe wird erfindungsgemäß durch ein Differentialgehäuse nach Anspruch 1 bzw. ein Verfahren zu dessen Herstellung und Montage nach Anspruch 7 gelöst.

Das erfindungsgemäße Differentialgehäuse zeichnet sich dadurch aus, daß die die Nietverbindung zwischen Gehäusedeckel und Gehäuseglocke herstellenden Niete einteilig am Gehäusedeckel oder an der Gehäuseglocke angeformt sind. Bei dem erfindungsgemäßen Verfahren werden die am Gehäusedeckel oder an der Gehäuseglocke angeformten Rohniete zur Montage des Differentialgehäuses mit ihrem freien Ende durch ihnen zugeordnete Bohrungen am anderen Gehäuseteil hindurchgeführt und deren freie Enden anschließend zur Herstellung der Nietverbindung - mittels bekannter Umformtechniken - umgeformt.

Damit sind bei einem erfindungsgemäßen Differentialgehäuse zur Herstellung der Nietverbindung keine separaten Niete erforderlich. Durch die angeformten Rohniete und die ihnen zugeordneten Bohrungen ist die relative Lage der beiden Gehäuseteile des Differentialgehäuses festgelegt, womit bei deren Montage auf separate Zentrierstifte verzichtet werden kann. Ferner muß das Gehäuseteil, an welchem die Rohniete einteilig angeformt sind, nicht mit Bohrungen für separate Niete ausgestattet werden. Zudem steht an dem erfindungsgemäßen Differentialgehäuse - im Gegensatz zu herkömmlichen Nietverbindung - auf der der Nietverbindung abgewandten Seite des mit angeformten Nieten ausgestatteten Gehäuseteils kein störender Setz- oder Schließkopf einer herkömmlichen Nietverbindung hervor, was eine nicht unerhebliche Bauraumeinsparung bedeutet.

Das erfindungsgemäße mehrteilige Differentialgehäuse kann aus Stahl oder anderen geeigneten Metallen und/oder Legierungen, wie beispielsweise Aluminium oder sonstigen Leichtbaumetallen hergestellt sein. Wenngleich unter dem zur Charakterisierung der Ausbildung der Niete gewählten Begriff "einteilig angeformt" bevorzugt eine einstückige Anformung gleichen Materials zu verstehen ist, so können bei einem erfindungsgemäßen Differentialgehäuse ggfs. auch ganze Niete oder innerhalb angeformter Niete verlaufende Verstärkungen anderen Materials und/oder eine die Nietverbindung verbessernde Beschichtung der Niete vorgesehen sein. Zur Herstellung der Gehäuseteile samt den an einem Gehäuseteil einteilig angeformten Nieten bieten sich die gängigen Guß- und/oder Umformtechniken, wie z.B. Schmieden, an.

Das erfindungsgemäße Differentialgehäuse erlaubt eine hohe Flexibilität in der exakten Ausgestaltung der am Gehäusedeckel oder an der Gehäuseglocke einteilig angeformten Rohniete.

Obgleich prinzipiell auch zylindrische Rohniete vorgesehen sein können, so weisen die Rohniete in einer ersten bevorzugten Ausgestaltung der Erfindung eine über ihre axiale Länge erstreckte konische Form auf. Bevorzugt ist dabei ein Konuswinkel im Bereich von 0° bis 5° oder, nochmals bevorzugt, von 0,5° bis 5° vorgesehen.

Die konische Ausgestaltung der Rohniete gibt diesen eine bessere "Fußfestigkeit" im Bereich ihrer Anformung am Gehäusedeckel oder an der Gehäuseglocke. Ferner erleichtert die konische Form der Rohniete deren Hindurchführung durch entsprechende Bohrungen des anderen Gehäuseteils und erleichtert somit deren lagerichtiges Zentrieren. Beim eigentlichen Herstellen der Nietverbindung während des Umformprozesses des Nietkopfes wird der gesamte - zunächst noch konisch ausgebildete - Nietschaft derart gestaucht und verformt, daß in den vorzugsweise zylindrischen Bohrungen des anderen Gehäuseteils ein guter Kontakt im Bereich der Lochleibung erzielbar ist, was zu einem hohen Kraftschluß der Nietverbindung führt.

Gemäß einer bevorzugten Weiterbildung der Erfindung kann vorgesehen sein, daß die am Gehäusedeckel oder der Gehäuseglocke angeformten Rohniete über ihre axiale Länge zwei Bereiche mit verschiedenem Konuswinkel aufweisen. Diese Konusbereiche können entweder unmittelbar und kantig aneinander anschließen oder bevorzugt auch kontinuierlich ineinander übergehen. Im übrigen kann vorgesehen sein, daß die Rohniete an ihrem freien Ende eine Fase aufweisen. Die Konizität eines Rohniets kann auch insgesamt über seine gesamte axiale Länge zu seinem freien Ende hin kontinuierlich zunehmen.

Mit mehreren Konusbereichen bzw. einer kontinuierlich verlaufenden Konizität der Niete kann bei geeigneten Konuswinkeln die Zentrierung der beiden Gehäuseteile zueinander bei ihrer Montage nochmals verbessert werden. Ferner kann mit einer - kontinuierlich oder stufig - zum Nietkopf hin steigenden Konizität das Ausmaß des - nach dem Umformen des freien Endes des Niets entstehenden - Schließkopfes verringert werden, was sich insbesondere bei beengtem Bauraum als vorteilhaft erweist. Bei einer Nietverbindung ist nämlich nicht die Dicke oder der Durchmesser des Schließkopfes von entscheidender Bedeutung; vielmehr wir der Kraftschluß zu großen Teilen durch die Lochleibung des Niets innerhalb der Bohrung erzeugt.

Gemäß einer weiteren bevorzugten Ausgestaltung der vorliegenden Erfindung sind der Gehäusedeckel, die Gehäuseglocke und die einteilig am Deckel oder der Glocke angeformten Niete aus Aluminium oder einer Aluminiumlegierung hergestellt. Es bieten sich hierfür die bekannten Guß- oder Umformtechniken, wie z.B. Schmieden, an. Es hat sich herausgestellt, daß aus Aluminium am Gehäusedeckel oder an der Gehäuseglocke einteilig angeformte Rohniete eine für den vorliegenden Zweck geeignete Vorspannung zwischen den Gehäuseteilen beim Herstellen der Nietverbindung erzeugen. Der Umformprozeß zur Erzeugung des Schließkopfes an einem Niet sorgt für eine gewisse Erwärmung des Niets während des Herstellens der Nietverbindung, so daß sich infolge des anschließenden Abkühlvorgangs und der damit einhergehenden Schrumpfung eine geeignete Vorspannung einstellt.

Durch Schmieden der Gehäuseteile samt angeformter Rohniete lassen sich hervorragende Materialeigenschaften für ein erfindungsgemäßes Differentialgehäuse sicherstellen. Es erweist sich jedoch - insbesondere auch aus Kostengründen - als besonders vorteilhaft, wenn Gehäusedeckel, Gehäuseglocke und die angeformten Rohniete mittels des sogenannten Gegendruck-Kokillengußverfahrens (engl.: counter pressure casting) hergestellt werden. Dieses dem Fachmann als solches geläufige Herstellungsverfahren garantiert eine besonders geringe Mikroporösität des Werkstoffs, was bei hoher Festigkeit gleichzeitig für eine hohe Streckgrenze und gute Duktilität sorgt. Diese Materialeigenschaften kommen insbesondere der vorliegenden Nietverbindung insofern zu gute, als daß ein noch höherer Kraftschluß der Nietverbindung erzielbar ist.

Eine weitere vorteilhafte Ausgestaltung der Erfindung sieht eine Erwärmung der Rohniete vor dem eigentlichen Herstellen der Nietverbindung durch Umformen der freien Enden der Niete vor. Dies kann infolge der erfindungsgemäßen Ausgestaltung des Differentialgehäuses ganz einfach dadurch bewerkstelligt werden, daß dasjenige Gehäuseteil, an welchem die Niete einstückig angeformt sind, entsprechend erhitzt wird. Damit läßt sich - angepaßt an die jeweiligen Materialeigenschaften - die Vorspannung der Nietverbindung nochmals erhöhen. Infolge der höheren Materialtemperatur bei Erzeugung der Nietverbindung wird nämlich bei dem darauffolgenden Abkühlvorgang eine höhere Vorspannung erzeugt als dies bei einer geringeren Ausgangstemperatur der Fall ist.

Schließlich ist bei dem erfindungsgemäßen Differentialgehäuse das Antriebszahnrad mittels der an einem Gehäuseteil angeformten Rohniete drehfest zwischen Gehäusedeckel und Gehäuseglocke befestigt. Hierzu sind auch im Antriebszahnrad entsprechende Bohrungen zum Hindurchführen der Niete vorzusehen. Die Vorspannung der Nietverbindung sorgt auch hier für eine besonders gute Verspannung des Antriebszahnrades zwischen den Gehäuseteilen des Differentialgehäuses. Außerdem ist wiederum die Montage insofern erleichtert, als daß die relative Lage des Antriebszahnrads zu den beiden Gehäuseteilen durch die an einem Gehäuseteil einteilig angeformten Niete und die Bohrungen im Zahnrad und dem anderen Gehäuseteil vorgegeben ist.

Als weiterer Vorteil des erfindungsgemäßen Differentialgehäuses erweist es sich, daß die angeformten Niete in einer vorteilhaften Ausgestaltung der Erfindung in ihrem axialen Verlauf auch mit einer von einer Rotationssymmetrie abweichenden Form ausgebildet sein können. Hierbei sind die Bohrungsquerschnitte der Bohrungen im anderen Gehäuseteil und ggfs. dem Antriebszahnrad entsprechend an die asymmetrische Nietform anzupassen. Im übrigen kann das freie Ende der Rohniete - je nach Bedarf - entweder plan, konvex oder konkav ausgestaltet sind.

Nachfolgend wird die Erfindung anhand der Zeichnung näher erläutert. Dabei zeigt
- Fig. 1: einen Halbschnitt durch ein Ausführungsbeispiel eines erfindungsgemäßen, montierten Differentialgehäuses,
- Fig. 2 - 7: schematische Ansichten von sechs verschiedenen Ausführungen eines angeformten Rohniets und
- Fig. 8 - 14: detaillierte Schnittdarstellungen verschiedener angeformter Nietverbindungen.

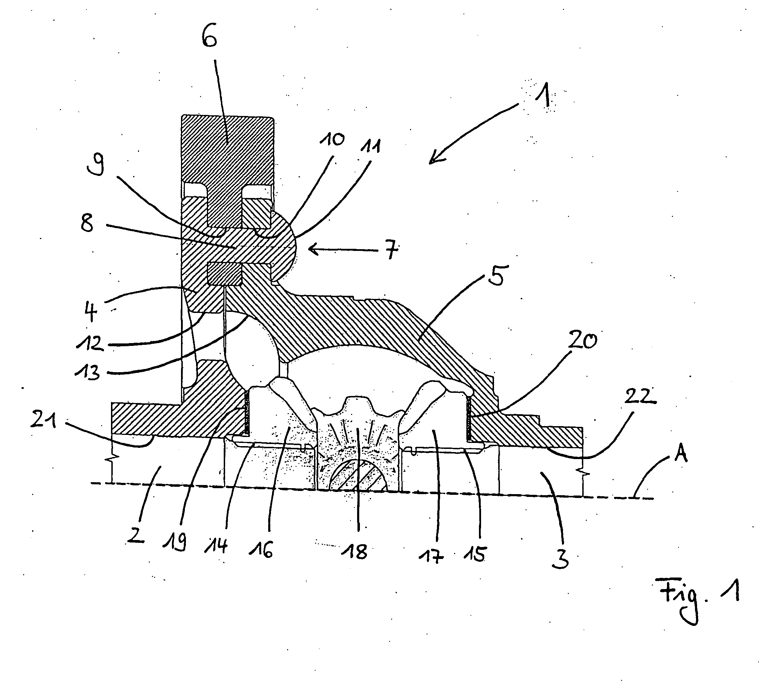

Fig. 1 zeigt einen Halbschnitt eines Ausführungsbeispiels eines erfindungsgemäßen Differentialgehäuses 1, wobei die Schnittebene durch die Achse A der beiden koaxialen Abtriebswellen 2, 3 und somit mittig durch das Ausgleichsgetriebe verläuft. Das Differentialgehäuse 1 umfaßt einen Gehäusedeckel 4 und eine Gehäuseglokke 5, zwischen denen das Antriebszahnrad 6 mittels einer Nietverbindung 7 drehfest verspannt ist. Die Nietverbindung 7 ist mittels mehrerer über den Umfang des Gehäuses verteilter und jeweils am Gehäusedeckel 4 einteilig angeformter Niete hergestellt, von denen im Schnitt aus Fig. 1 nur ein Niet 8 dargestellt ist. Das freie Ende des am Gehäusedeckel 4 einteilig angeformten Niets 8 wurde - vor der Umformung des freien Ende des Rohniets zur Herstellung der Nietverbindung 7 - zunächst durch eine Bohrung 9 im Antriebszahnrad 6 und eine Bohrung 10 in der Gehäuseglocke 5 hindurchgeführt, womit gleichzeitig die zu verbindenden Bauteile lagerichtig zueinander zentriert wurden. Anschließend wurde das freie Ende in fachüblicher Weise zur Herstellung der Nietverbindung 7 umgeformt, wodurch sich am Niet 8 der Schließkopf 11 ausgebildet hat.

Gehäusedeckel 4 und Gehäuseglocke 5 bilden zur Versorgung des Ausgleichsgetriebes mit Schmieröl entsprechende Schmierölkanäle 12, 13 aus. Die mit jeweils einer Abtriebswelle 2 bzw. 3 über eine Steckverbindung 14 bzw. 15 drehfest verbundenen Kegelräder 16, 17 kämmen von verschiedenen Seiten mit zwei an der Gehäuseglocke gelagerten Ritzeln 18, von denen infolge der gewählten Schnittebene in Fig. 1 nur eines 18 in frontaler Draufsicht zu erkennen ist. Die Kegelräder 16, 17 sind an ihrem der Verzahnung abgewandten Ende mittels geeigneter Abstandsscheiben 19, 20 gegen das jeweils benachbarte Gehäuseteil 4, 5 gelagert. Die koaxial verlaufenden Abtriebswellen 2, 3 verlassen das Differentialgehäuse 1 zu verschiedenen Seiten. Hierzu ist mittig im Gehäusedeckel 4 eine Öffnung 21 und in der Gehäuseglocke 5 eine entsprechende Öffnung 22 vorgesehen, in denen die Abtriebswellen 2, 3 drehbar gelagert sind.

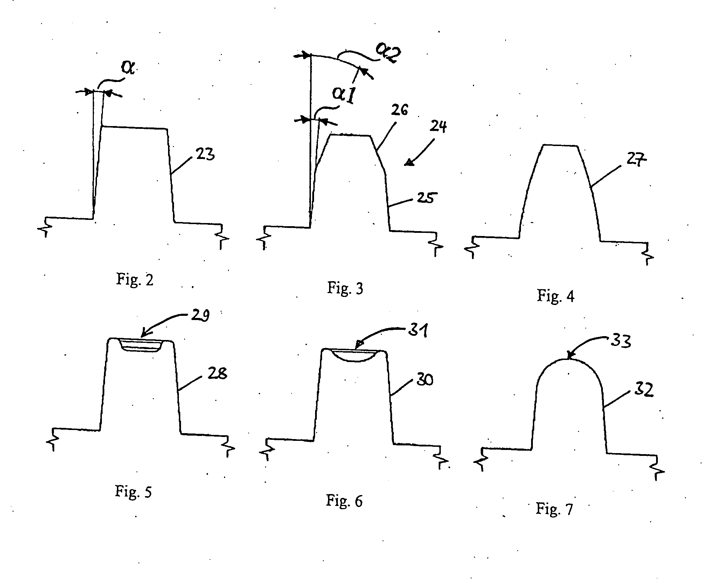

Die Fig. 2 bis 7 zeigen schematische Ansichten von sechs verschiedenen Ausführungen eines Rohniets erfindungsgemäßer Differentialgehäuse, die am Gehäusedeckel oder der Gehäuseglocke einteilig angeformt sein können. Der Niet 23 aus Fig. 2 ist konisch ausgebildet und weist dabei über seine gesamte axiale Länge den konstanten Konuswinkel α auf. Demgegenüber weist der Niet 24 aus Fig. 3 in seinem konischen Verlauf über seine axiale Länge zwei aneinander unmittelbar anschließende Bereiche 25, 26 mit verschiedenen Konuswinkeln α1 und α2 auf. Schließlich zeigt Fig. 4 eine weitere Ausgestaltung eines Niets 27, dessen Konizität zu seinem freien Ende hin stetig und kontinuierlich ansteigt. Während das freie Ende der Niete aus den Fig. 2 - 4 eine - in Bezug auf die Oberfläche an der sie einteilig angeformt sind - plan verläuft, zeigen die Niete 28, 30 und 32 der Fig. 5 - 7 eine andere Ausgestaltung ihres freien Endes. Das freie Ende 29 des Niets 28 aus Fig. 4 ist, wie das freie Ende 31 des Niets 30 aus Fig. 6, konkav ausgebildet. Die Niete der Fig. 5 und 6 unterscheiden sich nur in der konkreten Ausgestaltung des konkaven Endes des jeweiligen Niets. Demgegenüber ist der Niet 32 aus Fig. 7 mit einem konvexen freien Ende 33 ausgebildet, wobei der Übergang zwischen Nietschaft und freiem Ende kontinuierlich verläuft.

Mit der anhand der Fig. 2 bis 7 dargestellten Flexibilität bei der konkreten Ausgestaltung der Rohniete kann die durch Umformung des freien Endes der Rohniete hergestellte Nietverbindung flexibel an die jeweiligen Anforderungen angepaßt werden. Insbesondere läßt sich durch die in den Fig. 3 und 4 dargestellte erhöhte Konizität im Bereich des freien Endes der Rohniete 24 und 27 die Größe des nach der Herstellung der Nietverbindung entstehenden Schließkopfes verringern. Mit der konkaven Ausgestaltung des freien Endes der Rohniete 28, 30 der Fig. 5 und 6 läßt sich bei Verwendung eines entsprechend geformten Umformwerkzeugs der Materialfluß beim Umformen des freien Endes der Rohniete - zur Erhöhung der Lochleibung und damit des Kraftschlusses der fertigen Nietverbindung - optimieren.

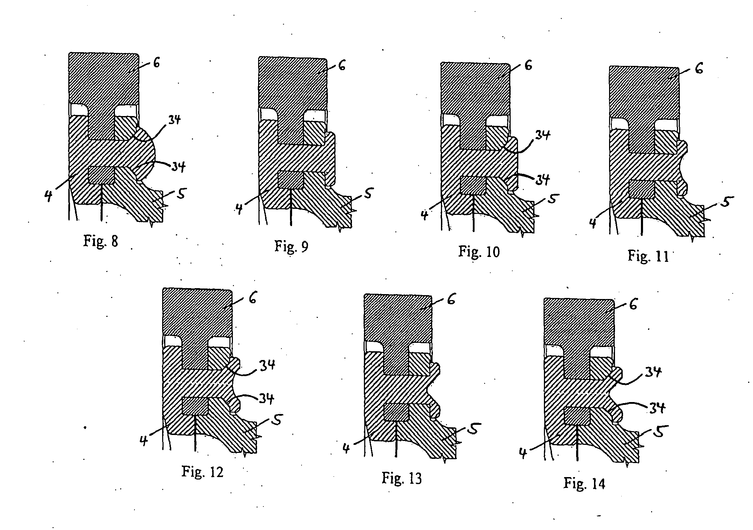

Schließlich zeigen die Fig. 8 bis 14 noch mehrere Detaildarstellungen verschiedener Nietverbindung weiterer Ausführungsbeispiele eines erfindungsgemäßen Differentialgehäuses. Dabei sind in allen Detaildarstellungen der Fig. 8 - 14 der Gehäusedeckel 4, das Antriebszahnrad 6 und die Gehäuseglocke 5 durch eine Nietverbindung mit am Gehäusedeckel 4 einteilig angeformten Nieten miteinander verbunden, wie dies auch bereits anhand der Fig. 1 erläutert wurde. Die dargestellten Nietverbindungen unterscheiden sich lediglich dadurch, daß in den Fig. 8, 10, 12 und 14 die Bohrung in der Gehäuseglocke auf derjenigen Seite, auf der sich der Schließkopf des Niets befindet eine Fase 34 aufweisen, wodurch der Kraftschluß der Nietverbindung verbessert wird. Ferner ist der Schließkopf des Niets aus Fig. 8 - wie auch derjenige aus Fig. 1 - konvex, wohingegen die Schließköpfe der Nietverbindungen nach Fig. 9 und 10 plan und diejenigen der Fig. 11 - 14 konkav ausgebildet sind.

## Patentansprüche

1. Differentialgehäuse (1) umfassend eine Gehäuseglocke (5), einen Gehäusedeckel (4) und ein Antriebszahnrad (6), wobei Gehäuseglocke (5) und Gehäusedeckel (4) mittels einer durch mehrere Niete (8) hergestellten Nietverbindung (7) miteinander verbunden sind,
**dadurch gekennzeichnet,**
**daß** die Niete (8) der Nietverbindung (7) einteilig am Gehäusedeckel (4) oder an der Gehäuseglocke (5) angeformt sind und dass das Antriebszahnrad (6) mittels der angeformten Niete (8) drehfest zwischen Gehäusedeckel (4) und Gehäuseglocke (5) befestigt ist.

2. Differentialgehäuse nach Anspruch 1,
**dadurch gekennzeichnet,**
**daß** die zur Herstellung der Nietverbindung (7) an einem Gehäuseteil (4,5) angeformten Rohniete (23,24,27,28,30,32) eine konische Form aufweisen.

3. Differentialgehäuse nach Anspruch 2,
**dadurch gekennzeichnet,**
**daß** der Konuswinkel (α) in einem Bereich zwischen 0 und 5° liegt.

4. Differentialgehäuse nach Anspruch 2,
**dadurch gekennzeichnet,**
**daß** die Rohniete (24) über ihre axiale Länge zwei Bereiche (25,26) mit verschiedenen Konuswinkeln (α1, α2) aufweisen.

5. Differentialgehäuse nach Anspruch 1,
**dadurch gekennzeichnet, daß** Gehäusedeckel (4), Gehäuseglocke (5) und Niete (8) aus Aluminium oder einer Aluminiumlegierung hergestellt sind.

6. Differentialgehäuse nach Anspruch 1,
**dadurch gekennzeichnet,**
**daß** die Rohniete in einem senkrecht zu ihrer Axialrichtung verlaufenden Schnitt nicht rotationssysmmetrisch sind.

7. Verfahren zur Herstellung und Montage eines Differentialgehäuses (1) nach Anspruch 1,
**dadurch gekennzeichnet,**
**daß** die am Gehäusedeckel (4) oder an der Gehäuseglocke (5) angeformten Rohniete (23,24,27,28,30,32) mit ihrem freien Ende durch ihnen zugeordnete Bohrungen (9,10) am Antriebszahnrad (6) und am anderen Gehäuseteil (5,4) hindurchgeführt werden und deren freie Enden anschließend zur Herstellung der Nietverbindung (7) umgeformt werden.

8. Verfahren nach Anspruch 7,
**dadurch gekennzeichnet,**
**daß** die Gehäuseteile (4,5) des Differentialgehäuses beim Hindurchführen der Rohniete (23,24,27,28,30,32) zueinander zentriert werden.

9. Verfahren nach Anspruch 7,
**dadurch gekennzeichnet,**
**daß** Gehäusedeckel (4), Gehäuseglocke (5) und die angeformten Rohniete (23,24,27,28,30,32) aus Aluminium oder einer Aluminiumlegierung gegossen oder geschmiedet werden.

10. Verfahren nach Anspruch 9,
**dadurch gekennzeichnet,**
**daß** Gehäusedeckel (4), Gehäuseglocke (5) und die angeformten Rohniete (23,24,27,28,30,32) mittels des Gegendruck-Kokillengußverfahrens hergestellt werden.

11. Verfahren nach Anspruch 7,
**dadurch gekennzeichnet,**
**daß** die Rohniete (23,24,27,28,30,32) vor dem Herstellen der Nietverbindung (7) vorgewärmt werden.

## Claims

1. A differential housing (1) comprising a housing bell (5), a housing lid (4) and a drive gear (6), wherein housing bell (5) and housing lid (4) are connected with each other by means of a rivet connection (7) produced through a plurality of rivets (8),
**characterized in that**
the rivets (8) of the rivet connection (7) are moulded as one part on to the housing lid (4) or on to the housing bell (5) and that the drive gear (6) by means of the moulded-on rivets (8) is fastened between housing lid (4) and housing bell (5) in a rotationally fixed manner.

2. The differential housing according to Claim 1, **characterized in that** the raw rivets (23, 24, 27, 28, 30, 32) moulded on to a housing part (4, 5) for establishing the rivet connection (7) have a conical shape.

3. The differential housing according to Claim 2, **characterized in that**
the cone angle α lies in a range between 0 and 5°.

4. The differential housing according to Claim 2, **characterized in that**
the raw rivets (24) over their axial length have two regions (25, 26) with different cone angles (α1, α2).

5. The differential housing according to Claim 1,
**characterized in that** the housing lid (4), housing
bell (5) and rivet (8) are produced of aluminium or an aluminium alloy.

6. The differential housing according to Claim 1, **characterized in that** the raw rivets in a section running vertically to its axial direction are not rotation-symmetrical.

7. A method for the production and assembly of a differential housing (1) according to Claim 1, **characterized in that** the raw rivets (23, 24, 27, 28, 30, 32) moulded on to the housing lid (4) or on to the housing bell (5) with their free end are passed through bores (9, 10) assigned to them on the drive gear (6) and on the other housing part (5, 4) and their free ends are subsequently formed for producing the rivet connection (7).

8. The method according to Claim 7, **characterized in that** the housing parts (4, 5) of the differential housing on passing through of the raw rivets (23, 24, 27, 28, 30, 32) are centred relative to each other.

9. The method according to Claim 7, **characterized in that** the housing lid (4), housing bell (5) and the moulded-on raw rivets (23, 24, 27, 28, 30, 32) are cast or forged of aluminium or an aluminium alloy.

10. The method according to Claim 9, **characterized in that** housing lid (4), housing bell (5) and the moulded-on raw rivets (23, 24, 27, 28, 30, 32) are produced by means of the back pressure die casting method.

11. The method according to Claim 7, **characterized in that** the raw rivets (23, 24, 27, 28, 30, 32) are preheated before establishing the rivet connection (7).

## Revendications

1. Carter de différentiel (1) comprenant une cloche de carter (5), un couvercle de carter (4) et une roue dentée d'entraînement (6), la cloche de carter (5) et le couvercle de carter (4) étant reliés l'un à l'autre au moyen d'un assemblage par rivetage (7) formé par plusieurs rivets (8),
**caractérisé en ce que**
les rivets (8) de l'assemblage par rivetage (7) sont formés d'une seule pièce sur le couvercle de carter (4) ou sur la cloche de carter (5), et **en ce que** la roue dentée d'entraînement (6) est fixée en solidarité de rotation entre le couvercle de carter (4) et la cloche de carter (5) au moyen des rivets (8).

2. Carter de différentiel selon la revendication 1,
**caractérisé en ce que**
les rivets bruts (23, 24, 27, 28, 30, 32) formés sur une partie de carter (4, 5) pour la réalisation de l'assemblage par rivetage (7) présentent une forme conique.

3. Carter de différentiel selon la revendication 2,
**caractérisé en ce que**
l'angle de conicité (α) est compris entre 0 et 5°.

4. Carter de différentiel selon la revendication 2,
**caractérisé en ce que**
les rivets bruts (24) comportent deux zones (25, 26) dans leur longueur axiale, avec des angles de conicité (α1, α2) différents.

5. Carter de différentiel selon la revendication 1,
**caractérisé en ce que**
le couvercle de carter (4), la cloche de carter (5) et les rivets (8) sont fabriqués en aluminium ou en un alliage d'aluminium.

6. Carter de différentiel selon la revendication 1,
**caractérisé en ce que**
les rivets bruts ne sont pas symétriques en rotation dans une section s'étendant verticalement à leur sens axial.

7. Procédé pour la fabrication et le montage d'un carter de différentiel (1) selon la revendication 1,
**caractérisé en ce que**
les rivets bruts (23, 24, 27, 28, 30, 32) formés sur le couvercle de carter (4) ou sur la cloche de carter (5) sont introduits par leur extrémité libre dans des perçages (9, 10) correspondants dans la roue dentée d'entraînement (6) et dans l'autre partie de carter (5, 4), et leur extrémité libre étant ensuite déformée pour la réalisation de l'assemblage par rivetage (7).

8. Procédé selon la revendication 7,
**caractérisé en ce que**
les parties de carter (4, 5) du carter de différentiel sont centrées les unes vers les autres lors de l'introduction des rivets bruts (23, 24, 27, 28, 30, 32).

9. Procédé selon la revendication 7,
**caractérisé en ce que**
le couvercle de carter (4), la cloche de carter (5) et les rivets bruts (23, 24, 27, 28, 30, 32) sont coulés ou forgés en aluminium ou en un alliage d'aluminium.

10. Procédé selon la revendication 9,
**caractérisé en ce que** le couvercle de carter (4), la cloche de carter (5) et les rivets bruts (23, 24, 27, 28, 30, 32) sont fabriqués au moyen d'un procédé de moulage en coquille en contre-pression.

11. Procédé selon la revendication 7,
**caractérisé en ce que**
les rivets bruts (23, 24, 27, 28, 30, 32) sont préchauffés avant la réalisation de l'assemblage par rivetage (7).
